# EUROPÄISCHE PATENTSCHRIFT

(11) **EP 3 278 311 B1**
(45) Veröffentlichungstag und Bekanntmachung des Hinweises auf die Patenterteilung: **23.10.2024**
(21) Anmeldenummer: 16710412.4
(22) Anmeldetag: 11.03.2016
(51) Int. Cl.: G07C 9/00

(54) **SYSTEM ZUM AUFWACHEN EINER BATTERIEBETRIEBENEN EINRICHTUNG**
SYSTEM FOR WAKING UP A BATTERY OPERATED DEVICE
SYSTÈME POUR RÉVEILLER UN DISPOSITIF FONCTIONNANT SUR BATTERIE

(30) Priorität: 31.03.2015 DE 102015105008
(43) Veröffentlichungstag der Anmeldung: 07.02.2018
(73) Patentinhaber: Marquardt GmbH, 78604 Rietheim-Weilheim (DE); Microchip Technology Inc., Chandler, AZ 85224 (US)
(72) Erfinder: OBERGFELL, Robert, 78166 Donaueschingen (DE); WAGNER, Sascha, 74080 Heilbronn (DE); HOFINGER, Matthias, 89231 Neu-Ulm (DE)
(74) Vertreter: Staeger & Sperling Partnerschaftsgesellschaft mbB
(86) Internationale Anmeldenummer: PCT/EP2016/055220
(87) Internationale Veröffentlichungsnummer: WO 2016/156008

(56) Entgegenhaltungen:
- EP-A1- 1 867 535
- DE-A1- 102009 043 054
- DE-A1- 102010 036 787
- DE-C1- 19 846 803
- DE-U1- 202005 014 136

## Beschreibung

Die Erfindung betrifft ein System zum Aktivieren einer elektrisch oder elektronisch gesteuerten Einrichtung aus einem energiesparenden passiven Zustand gemäß dem Oberbegriff des Anspruchs 1.

Solche Systeme sind zum Beispiel als Vorrichtungen zum Schließen oder Öffnen, insbesondere für Haustüren, Fernsteuerungen, Fahrzeugschließanlagen, etc. bekannt aus dem Stand der Technik. Zum Beispiel werden in den Druckschriften EP 1 867 535 B1, DE 10 2010 036787 A1, DE 20 2005 014136 U1 oder DE 10 2009 043054 A1 solche Systeme offenbart.

In einer bekannten Vorrichtung wird eine erste Einrichtung in einem Basisobjekt, z.B. in einem Gebäude, in einem Kraftfahrzeug, etc. vorgesehen, die in der Lage ist, eine zweite Einrichtung zu aktivieren, die in der Art eines elektronischen Schlüssels, eines ID-Transponders, einer Chipkarte oder dergleichen ausgebildet ist. Beide Einrichtungen der vorgesehenen Vorrichtung haben Sender und/oder Empfänger für elektromagnetische Signale.

In der bekannten Vorrichtung bleibt die zweite Einrichtung in einem Standby-Zustand, wenn die zweite Einrichtung nicht in einem Betriebsmodus ist. Wenn die zweite Einrichtung in die Empfangsreichweite der ersten Einrichtung kommt, aktiviert die erste Einrichtung die zweite Einrichtung für den weiteren Betrieb. Im Standby-Modus ist die zweite Einrichtung in einem Zustand mit geringem Energieverbrauch. Dennoch stellt der geringe Energieverbrauch eine Begrenzung für die Lebenszeit der Batterie in der zweiten Einrichtung dar. Daher arbeiten bekannte Vorrichtungen zum Schließen und Öffnen mit LF-Sendern um den Energieverbrauch zu reduzieren.

Ein Nachteil derartiger Vorrichtungen die mit LF-Sendern arbeiten, ist die kurze Reichweite zwischen der ersten und der zweiten Einrichtung.

Aufgabe der Erfindung ist es, diesen Nachteil zu beheben und eine Vorrichtung zum Aktivieren einer elektrisch oder elektronisch gesteuerten Vorrichtung aus einem energiesparenden, passiven Zustand mit einer größeren Reichweite zwischen der ersten und der zweiten Einrichtung zu ermöglichen, ohne die Lebenszeit der Batterie der zweiten Einrichtung zu reduzieren.

Diese Aufgabe wird durch die Merkmale des Anspruch 1 gelöst.

In den weiteren Ansprüchen sind vorteilhafte Weiterbildungen und Ausführungen der Erfindungen offenbart. Gemäß der Erfindung sendet die erste Einrichtung ein zyklisch wiederholtes Signal für die Aktivierung der zweiten Einrichtung mit einem ersten Datenprotokoll innerhalb eines ersten Sendezeitintervalls und mit einer ersten Zykluszeit.

Dies ermöglicht eine zeitgesteuerte Aktivierung der zweiten Einrichtung, vorzugsweise einen sogenannten polling-Betrieb der zweiten Einrichtung.

Aus diesem Grund kann die zweite Einrichtung vollständig mit Ausnahme der zeitgesteuerten aktivierten Intervalle deaktiviert werden, die eine sehr langsame Wiederholungsrate und vergleichsweise kurze aktive Zeitintervalle aufweisen können. Der Energieverbrauch der zweiten Einrichtung kann um einen signifikanten Betrag reduziert werden, was zum Beispiel die Verwendung höherer Frequenzen, VHF und/oder UHF anstatt LF Frequenzen für die Sender und die Vergrößerung der Reichweite ermöglicht.

Die zweite Einrichtung weist einen zyklisch wiederholten Empfangsmodus für ein bestimmtes erstes Empfangszeitintervall der zweiten Einrichtung auf. Ein zyklisch wiederholter Empfangsmodus verwirklicht einen polling-Betriebsmodus für die zweite Einrichtung und vereinfacht die Zeitsteuerung der zweiten Einrichtung.

Weiterhin ist das erste Empfangszeitintervall der zweiten Einrichtung länger als das erste Sendezeitintervall des ersten Datenprotokolls der ersten Einrichtung.

Diese Beziehung zwischen dem Empfangszeitintervall der zweiten Einrichtung und des Sendezeitintervalls des ersten Datenprotokolls der ersten Einrichtung ermöglicht es der zweiten Einrichtung, ein vollständiges erstes Datenprotokoll der ersten Einrichtung im zeitgesteuerten Aktivierungsmodus innerhalb des ersten Empfangszeitintervalls der zweiten Einrichtung zu empfangen.

Da das erste Sendezeitintervall des ersten Datenprotokolls der ersten Einrichtung sehr kurz sein kann, ist die. absolute Zeit für das erste Empfangszeitintervall der zweiten Einrichtung ebenso kurz, selbst wenn es länger ist als das erste Sendezeitintervall des ersten Datenprotokolls der ersten
Einrichtung. In Verbindung mit einer sehr langen Zykluszeit für den zyklisch wiederholten Empfangsmodus der zweiten Einrichtung kann ein minimaler Energieverbrauch realisiert werden.

Vorteilhafterweise sendet die erste Einrichtung ein zweites oder mehrere zyklisch wiederholte Signale zur Authentifikation der zweiten Einrichtung mit einem zweiten Datenprotokoll innerhalb eines zweiten Sendezeitintervalls und mit einer zweiten Zykluszeit, wobei das erste Sendezeitintervall kürzer ist als das zweite Sendezeitintervall und die erste Zykluszeit kürzer ist als die zweite Zykluszeit.

So kann für die Authentifikation der zweiten Einrichtung ein höheres Datenvolumen als im ersten Datenprotokoll übertragen werden, das nur die Funktion hat, die zeitgesteuerte, zweite Einrichtung zu aktivieren.

Gemäß der Erfindung ist das erste Empfangszeitintervall der zweiten Einrichtung im Wesentlichen ein Vielfaches des ersten Sendezeitintervalls des ersten Datenprotokolls.

Durch diese Beziehung wird die Wahrscheinlichkeit erhöht, dass die zweite Einrichtung das komplette erste Datenprotokoll empfängt.

Erfindungsgemäß entspricht das erste Empfangszeitintervall der zweiten Einrichtung im Wesentlichen der ersten Zykluszeit der ersten Einrichtung für die Aktivierung der zweiten Einrichtung. In diesem Fall ist eine hohe Wahrscheinlichkeit gegeben, dass die zweite Einrichtung in der Lage ist, im ersten Empfangszeitintervall das erste Datenprotokoll der ersten Einrichtung für die Aktivierung der zweiten Einrichtung zu empfangen.

Vorteilhafterweise verbleibt oder kommt die zweite Einrichtung in einen Empfangsmodus für ein zweites Empfangszeitintervall nach Empfang eines ersten Datenprotokolls der ersten Einrichtung, innerhalb dessen das zweite oder mehrere Signale der ersten Einrichtung zur Authentifikation einer zweiten Einrichtung mit einem zweiten Datenprotokoll durch die zweite Einrichtung vollständig empfangbar sind. Wenn die zweite Einrichtung durch Zeitsteuerung aktiviert ist und das erste Datenprotokoll der ersten Einrichtung empfangen hat, ist die zweite Einrichtung in der Lage, auf das zweite oder mehrere Signale der ersten Einrichtung zur Authentifikation der zweiten Einrichtung mit einem zweiten Datenprotokoll zu warten. Das zweite Datenprotokoll hat ein höheres Datenvolumen als das erste Datenprotokoll. Durch die Aktivierung der zweiten Einrichtung kann die zweite Einrichtung ein zweites Datenprotokoll in einem oder mehrere zweiten Empfangszeitintervallen empfangen.

Vorteilhafterweise entspricht das zweite Empfangszeitintervall der zweiten Einrichtung im Empfangsmodus nach Empfang des ersten Datenprotokolls im Wesentlichen der zweiten Zykluszeit des zweiten oder mehrerer Signale der ersten Einrichtung. Diese Zeitanpassung bewirkt, dass im Wesentlichen die komplette zweite Zykluszeit des zweiten oder mehrerer Signale der ersten Einrichtung durch die zweite Einrichtung überwacht werden kann auf Grund der entsprechenden Länge des zweiten Empfangszeitintervalls.

In besonderen Ausführungsformen der Erfindung sind das zweite oder mehrere Signale der ersten Einrichtung in zwei oder mehrere Blöcke geteilt. Zwei oder mehrere Datenblöcke können mit einer höheren Datenübertragungssicherheit versehen werden.

In einer besonderen Ausführung der Erfindung bleibt die zweite Einrichtung bei wenigstens teilweiser Überschneidung des ersten Empfangszeitintervalls der zweiten Einrichtung mit dem zweiten Sendezeitintervall der ersten Einrichtung für ein drittes Empfangszeitintervall im Empfangsmodus oder kommt in den Empfangsmodus, innerhalb dessen das zweite oder mehrere Signale der ersten Einrichtung mit dem zweiten Datenprotokoll durch die zweite Einrichtung vollständig empfangbar sind.

Im Falle einer wenigstens teilweisen Überschneidung des ersten Empfangszeitintervalls der zweiten Einrichtung mit dem zweiten Sendezeitintervall der ersten Einrichtung könnte eine unvollständige Datenübertragung zwischen der ersten und der zweiten Einrichtung stattfinden. Für diesen Fall bleibt oder kommt die zweite Einrichtung in den Empfangsmodus während eines dritten Empfangszeitintervalls um ein wiederholtes zweites Datenprotokoll vollständig zu empfangen.

Da erfindungsgemäß die zweite Einrichtung einen sehr geringen Energieverbrauch aufweist, besteht die Möglichkeit, höhere Frequenzen für die Trägerwelle der Sender zu verwenden.

Vorzugsweisen liegt die Frequenz der Trägerwelle für das erste und/oder zweite Signal im VF-Bereich (30 MHz- 300 MHz) und/oder UHF-Bereich (300 MHz -3 GHz). Beispielsweise besteht eine Möglichkeit der Verwendung höherer Frequenzen für die Trägerwelle darin, die Frequenz für die erste Trägerwelle für das erste und/oder zweite Signal höher als 100 MHz zu wählen, vorzugsweise im ISM-Band von 433,05 MHz - ,79 MHz und/oder im ISM-Band von 902 MHz - 928 MHz.

Diese Frequenzbereiche sind zugelassen für Frequenzbänder, die im Vergleich zum Stand der Technik eine signifikant größere Reichweite zwischen der ersten und der zweiten Einrichtungen bewirken. Diese größere Reichweite kann für neue Zusatzfunktionen verwendet werden, beispielsweise im Fall der Anwendung in einem Basisobjekt wie ein Gebäude, ein Kraftfahrzeug, etc., um die Beleuchtung auch bei größerer Annäherungsdistanz der zweiten Einrichtung zu der ersten Einrichtung im Basisobjekt zu schalten.

Natürlich können andere Dienste in äquivalenter Weise bei Annährung an das Basisobjekt genutzt werden, wobei diese Dienste bei relativ großem Abstand zum Kraftfahrzeug initialisierbar sind.

Ein Ausführungsbeispiel der Erfindung ist in den Zeichnungen offenbart und nachfolgend anhand der Figuren näher beschrieben.
- Figur 1: zeigt eine perspektivische Darstellung eines Gebäudes und eine Bedienperson eines Gebäudes zur Veranschaulichung de Erfindung,
- Figur 2: zeigt ein Diagramm als Beispiel für einen Zeitablauf der Sende- und Empfangssignale und
- Figur 3: zeigt ein weiteres Diagramm als Beispiel für einen Zeitablauf mit höherem Datenaufkommen.

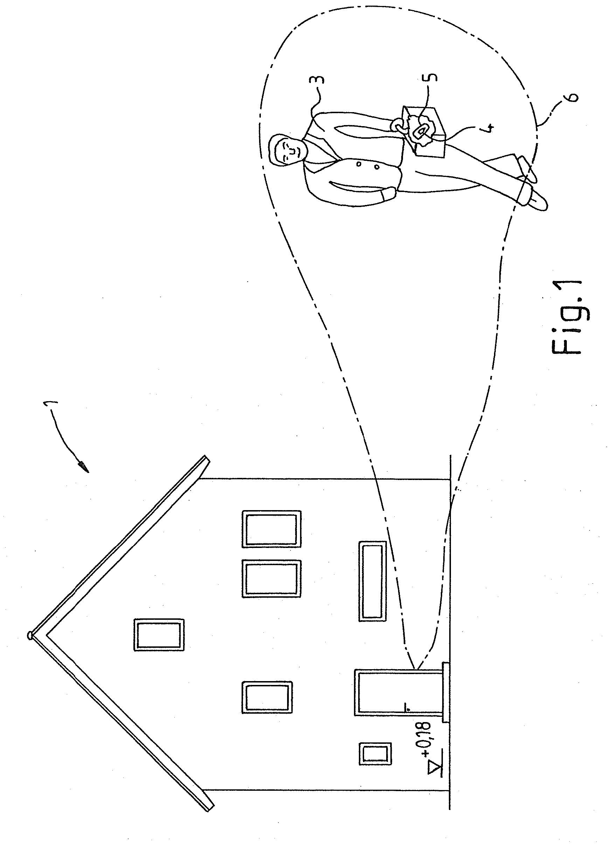

In Figur 1 ist ein Gebäude 1 gezeigt, in dem eine erste Einrichtung 2 mit einem Sender angeordnet ist. Eine Bedienperson 3 trägt eine Handtasche mit einer zweiten Einrichtung 4 im Inneren, insbesondere einem Schlüssel. Wenn sich die Bedienperson dem Gebäude nähert, kommen die Bedienperson und der Schlüssel 5 in die Reichweite 6 zwischen der ersten Einrichtung 2 und der zweiten Einrichtung 4.

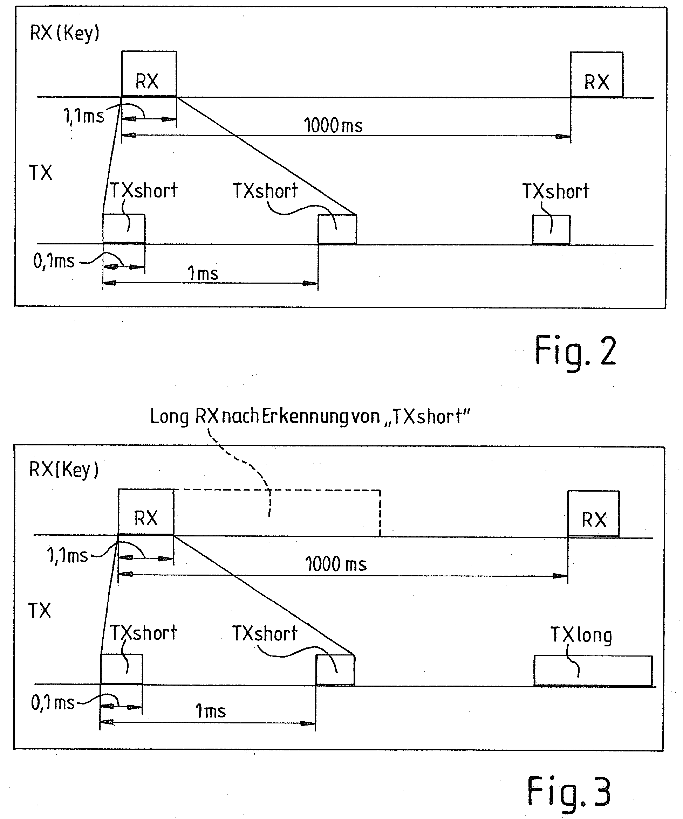

In Figur 2 ist das erste zyklisch wiederholte Signal (TX kurz) der ersten Einrichtung (TX) dargestellt. In dieser Ausführungsform dauert das Zeitintervall für das erste zyklisch wiederholte Signal (TX kurz) der ersten Einrichtung 0,1 ms. Die erste Zykluszeit des ersten zyklisch wiederholten Signals (TX) ist mit 1 ms dargestellt.

Dies bedeutet, dass das erste Signal der ersten Einrichtung einen bestimmten Energieverbrauch benötigt, um die kurze Zykluszeit mit einer entsprechend hohen Wiederholungsrate erhalten. Dies ist kein Problem, da die erste Einrichtung mit dem entsprechenden Sender im Gebäude eingeordnet ist.

Der Schlüssel (oder die zweite Einrichtung) hat zeitgesteuerte aktivierte Intervalle, in denen die zweite Einrichtung (car key) im Empfangsmodus (RX) ist. Es ist wichtig, festzustellen, dass die Zeitskalen für die Signale (TX) und den Empfangsmodus (RX) sich stark unterscheiden.

So ist in Figur 2 dargestellt, dass die zweite Einrichtung beziehungsweise der Schlüssel 5 einen zyklisch wiederholten Empfangsmodus (RX) für ein bestimmtes erstes Empfangszeitintervall von 1,1 ms aufweist, das der Zykluszeit von 1 ms des ersten Datenprotokolls der ersten Einrichtung (TX) entspricht, um zu gewährleisten, dass wenigstens ein komplettes TX short Signal empfangen wird. Die Zykluszeit des ersten zyklisch wiederholten Empfangsmodus der zweiten Errichtung befindet sich in einer wesentlich größeren Zeitskala, beispielsweise 1000 ms wie in Figur 2 dargestellt. Durch diese Zeitbeziehungen zwischen dem Sendesignal (TX) der ersten Einrichtung und dem Empfangsmodus (RX) der zweiten Einrichtung ist sichergestellt, dass eine hohe Wahrscheinlichkeit vorliegt, dass im Empfangsmodus (RX) der zweiten Einrichtung ein ersten Datenprotokoll (TX short) der ersten Einrichtung vollständig empfangbar ist.

In Figur 3 ist ein Beispiel eines Zeitablaufs mit höherem Datenaufkommen gezeigt. Das erste zyklisch wiederholte Signal der ersten Einrichtung mit einem ersten Datenprotokoll (TX short) entspricht (TX short) entsprechend Figur 2.

Der erste Empfangsmodus der zweiten Einrichtung (RX) entspricht dem ersten Empfangsmodus (RX) in Figur 2.

Nunmehr ist zusätzlich zum ersten Empfangsmodus (RX) ein längerer Empfangsmodus (RX) nach Erkennung eines "TX short" mit punktierten Linien gezeigt.

Weiterhin wird ein zweites zyklisch wiederholtes Signal der ersten Einrichtung (TX long) zur Authentifikation der zweiten Einrichtung mit einem zweiten Datenprotokoll innerhalb eines zweiten Sendezeitintervalls in Figur 3 gezeigt. Dieses zweite zyklisch wiederholte Signal der ersten Einrichtung kann durch einen random jitter Algorithmus ausgelöst werden, um den Zeitablauf der Übertragung zu variieren und ein wiederholtes Aufeinanderstoßen der Übertragung verschiedener Signale zu vermeiden.

Da der lange zweite Empfangsmodus der zweiten Einrichtung (long RX) ein Zeitintervall von ungefähr 500 ms aufweist, ist klar, dass innerhalb dieses Zeitintervalls das zweite zyklisch wiederholte Signal der ersten Einrichtung mit einem zweiten Datenprotokoll, das einige Millisekunden ab Beginn des letzten zyklisch wiederholten Signals der ersten Einrichtung (TX short) benötigt, vollständig innerhalb des zweiten Empfangsmodus der zweiten Einrichtung empfangbar ist.

Wie in dieser Ausführungsform erkennbar ist, ist der Energieverbrauch der zweiten Einrichtung auf ein Minimum reduziert, da der Empfänger der zweiten Einrichtung in der langsamsten Zykluszeit arbeiten kann, die durch die Systemgestaltung akzeptabel ist. Der Energie- oder Stromverbrauch ist nahezu proportional zur Empfangszykluszeit der zweiten Einrichtung.

Der Energie- oder Stromverbrauch kann auf die Werte, die für kleine Batterien (beispielsweise Knopfzellenbatterien) vertretbar sind, ohne signifikante Verkürzung der Batterielebenszeit verringert werden.

Eine Funkzulassung (RF Zulassung) nach den unterschiedlichsten Vorschriften in verschiedenen Ländern ist durch die oben beschriebenen Merkmale der Erfindung deutlich erleichtert. Dementsprechend kann der Betriebsabstand oder die Empfangsreichweite in einer Vorrichtung zum Schließen oder Öffnen gemäß der Erfindung durch die Verwendung höherer Frequenzen insbesondere VHF oder UHF Frequenzen vergrößert werden.

### Bezugszeichenliste:

- 1: Gebäude
- 2: erste Einrichtung
- 3: Bedienperson
- 4: zweite Einrichtung
- 5: Schlüssel
- 6: Reichweite

## Patentansprüche

1. System zum Aktivieren einer elektrisch oder elektronisch gesteuerten zweiten Einrichtung (4) aus einem energiesparenden, passiven Zustand
mit einer ersten Einrichtung und
mit einer zugehörigen zweiten Einrichtung (4) in Form eines elektronischen Schlüssels (5), eines ID-Transponders oder einer Chipkarte, zum Schließen und/oder Öffnen für einen Zugang und/oder eine Berechtigung und/oder für andere Dienste für eine Funkfernbedienung, für gesteuerte Haustüren oder für Kraftfahrzeuge,
wobei die beiden Einrichtungen zu deren bestimmungsgemäßen Betrieb Sender und Empfänger für elektromagnetische Signale aufweisen
wobei
der Sender der ersten Einrichtung zum Senden eines ersten Signals für die Aktivierung der zweiten Einrichtung (4) mit einem ersten Datenprotokoll innerhalb eines ersten Sendezeitintervalls (TXshort) und mit einer zyklischen Wiederholung mit einer ersten Zykluszeit ausgebildet ist und dass die zweite Einrichtung (4) in dem energiesparenden, passiven Zustand einen zyklisch wiederholten Empfangsmodus für ein bestimmtes erstes Empfangszeitintervall (RX) der zweiten Einrichtung (4) aufweist, der sich in einer wesentlich größeren Zeitskala befindet als die erste Zykluszeit,
wobei dieses erste Empfangszeitintervall (RX) der zweiten Einrichtung (4) ein Vielfaches des ersten Sendezeitintervalls (TXshort) des ersten Datenprotokolls der ersten Einrichtung ist und das erste Empfangszeitintervall (RX) der zweiten Einrichtung (4) im Wesentlichen der ersten Zykluszeit der ersten Einrichtung zur Aktivierung der zweiten Einrichtung (4) entspricht und
wobei die zweite Einrichtung (4) dazu ausgebildet ist, beim Empfang des ersten Datenprotokolls innerhalb eines ersten Empfangszeitintervalls (RX) sich aus dem energiesparenden, passiven Zustand zu aktivieren.

2. System nach Anspruch 1, **dadurch gekennzeichnet, dass**
die erste Einrichtung dazu ausgebildet ist, ein zweites oder mehrere zyklisch wiederholte Signale zur Authentifikation der zweiten Einrichtung (4) mit einem zweiten Datenprotokoll innerhalb eines zweiten Sendezeitintervalls (TXlong) und mit einer zweiten Zykluszeit zu senden, wobei das erste Sendezeitintervall (TXshort) kürzer ist als das zweite Sendezeitintervall (TXlong) und die erste Zykluszeit kürzer als die zweite Zykluszeit ist.

3. System nach Anspruch 2, **dadurch gekennzeichnet, dass**
die zweite Einrichtung (4) dazu ausgebildet ist, nach Empfang des ersten Datenprotokolls in einem Sendezeitintervall (TXshort) der ersten Einrichtung für ein zweites Empfangszeitintervall (RXlong) in einem Empfangsmodus zu bleiben oder in einen Empfangsmodus zu kommen, innerhalb dessen das zweite oder mehrere Signale der ersten Einrichtung zur Authentifikation der zweiten Einrichtung mit dem zweiten Datenprotokoll in dem zweiten Sendezeitintervall (TXlong) durch die zweite Einrichtung (4) vollständig empfangbar sind.

4. System nach Anspruch 3, **dadurch gekennzeichnet, dass**
das zweite Empfangszeitintervall (RXlong) der zweiten Einrichtung (4) im Empfangsmodus nach Empfang des ersten Datenprotokolls im ersten Sendezeitintervall (TXshort) der zweiten Zykluszeit des im zweiten Sendeintervall (TXlong) Übermittelten Signals oder mehrerer im zweiten Sendeintervall (TXlong) Übermittelten Signale der ersten Einrichtung entspricht.

5. System nach einem der vorgenannten Ansprüche 2, 3 oder 4, **dadurch gekennzeichnet, dass**
das zweite oder die mehreren Signale der ersten Einrichtung in zwei oder mehrere Blöcke geteilt ist.

6. System nach einem der vorgenannten Ansprüche 2, 3, 4 oder 5, **dadurch gekennzeichnet, dass**
die zweite Einrichtung (4) dazu ausgebildet ist, bei wenigstens teilweiser Überschneidung des ersten Empfangszeitintervalls (RX) der zweiten Einrichtung (4) mit dem zweiten Sendezeitintervall (TXlong) der ersten Einrichtung für ein drittes Empfangszeitintervall im Empfangsmodus zu bleiben oder in den Empfangsmodus zu kommen, innerhalb dessen das zweite oder mehrere Signale der ersten Einrichtung mit dem zweiten Datenprotokoll durch die zweite Einrichtung vollständig empfangbar sind.

7. System nach einem der vorgenannten Ansprüche, **dadurch gekennzeichnet, dass**
die Frequenz der Trägerwelle für das erste und/oder zweite Signal im VHF-Bereich (30 MHz bis 300 MHz) und/oder im UHF-Bereich (300 MHz bis 3 GHz) liegt.

8. System nach einem der vorgenannten Ansprüche, **dadurch gekennzeichnet, dass**
die Frequenz der Trägerwelle für das erste und/oder zweite Signal größer als 100 MHz, vorzugsweise im ISM Band von 433,05 MHz bis 434,79 MHz und/oder im ISM Band von 902 MHz bis 928 MHZ ist.

## Claims

1. A system for activating an electrically or electronically controlled second device (4) from an energy-saving, passive state
with a first device and
with an associated second device (4) in the form of an electronic key (5), an ID transponder or a chip card, for closing and/or opening for access and/or authorization and/or for other services for a radio remote control, for controlled front doors or for motor vehicles,
wherein the two devices have transmitters and receivers for electromagnetic signals for their intended operation,
wherein
the transmitter of the first device is designed to transmit a first signal for activating the second device (4) with a first data protocol within a first transmission time interval (TXshort) and with a cyclical repetition with a first cycle time, and in that the second device (4) in the energy-saving, passive state has a cyclically repeated reception mode for a specific first reception time interval (RX) of the second device (4), which is on a significantly larger time scale than the first cycle time,
wherein said first reception time interval (RX) of the second device (4) is a multiple longer than the first transmission time interval (TXshort) of the first data protocol of the first device and that the first reception time interval (RX) of the second device (4) substantially corresponds to at least the sum of the first cycle time and the first transmission time interval (TXshort) of the first device for activating the second device (4) and
the second device (4) is formed to activate itself from the energy-saving, passive state when the first data protocol is received within a first reception time interval (RX).

2. The system according to claim 1, **characterized in that**
the first device is formed to transmit a second or more cyclically repeated signals for authentication of the second device (4) with a second data protocol within a second transmission time interval (TXlong) and with a second cycle time, wherein the first transmission time interval (TXshort) is shorter than the second transmission time interval (TXlong) and the first cycle time is shorter than the second cycle time.

3. The system according to claim 2, **characterized in that**
the second device (4) is formed to, after reception of the first data protocol in a transmission time interval (TXshort) of the first device, remain in a reception mode for a second reception time interval (RXlong) or to enter a reception mode within which the second or more signals of the first device for authentication of the second device with the second data protocol are completely receivable by the second device (4) in the second transmission time interval (TXlong).

4. The system according to claim 3, **characterized in that**
the second reception time interval (RXlong) of the second device (4) in reception mode after reception of the first data protocol in the first transmission time interval (TXshort) corresponds to the second cycle time of the signal transmitted in the second transmission interval (TXlong) or of a plurality of signals transmitted in the second transmission interval (TXlong) of the first device.

5. The system according to one of the preceding claims 2, 3 or 4, **characterized in that**
the second or more signals of the first device are divided into two or more blocks.

6. The system according to one of the preceding claims 2, 3, 4 or 5, **characterized in that**
the second device (4) is formed to, if the first reception time interval (RX) of the second device (4) at least partially overlaps with the second transmission time interval (TXlong) of the first device, remain in the reception mode for a third reception time interval or enter the reception mode, within which the second or more signals of the first device with the second data protocol are completely receivable by the second device.

7. The system according to one of the preceding claims, **characterized in that**
the frequency of the carrier wave for the first and/or second signal is in the VHF range (30 MHz to 300 MHz) and/or in the UHF range (300 MHz to 3 GHZ).

8. The system according to one of the preceding claims, **characterized in that**
the frequency of the carrier wave for the first and/or second signal is greater than 100 MHz, preferably in the ISM band from 433.05 MHz to 434.79 MHz and/or in the ISM band from 902 MHz to 928 MHz.

## Revendications

1. Système permettant d'activer un deuxième dispositif (4) à commande électrique ou électronique à partir d'un état passif d'économie d'énergie, comprenant
un premier dispositif, et
un deuxième dispositif associé (4) sous la forme d'une clé électronique (5), d'un transpondeur d'ID ou d'une carte à puce, pour fermer et/ou ouvrir un accès, et/ou une autorisation et/ou pour d'autres services pour une télécommande radio, pour des portes de maison commandées ou pour des véhicule automobiles,
dans lequel les deux dispositifs présentent pour leur fonctionnement conforme des émetteurs et des récepteurs de signaux électromagnétiques,
dans lequel l'émetteur du premier dispositif est réalisé pour émettre un premier signal pour l'activation du deuxième dispositif (4) avec un premier protocole de données à l'intérieur d'un premier intervalle de temps d'émission (TXshort) et avec une répétition cyclique avec un premier temps de cycle, et en ce que le deuxième dispositif (4) présente à l'état passif d'économie d'énergie un mode réception répété cycliquement pendant un premier intervalle de temps de réception (RX) du deuxième dispositif (4) qui se trouve dans une échelle de temps nettement plus grande que le premier temps de cycle,
dans lequel ce premier intervalle de temps de réception (RX) du deuxième dispositif (4) est un multiple du premier intervalle de temps d'émission (TXshort) du premier protocole de données du premier dispositif, et le premier intervalle de temps de réception (RX) du deuxième dispositif (4) correspond substantiellement au premier temps de cycle du premier dispositif pour l'activation du deuxième dispositif (4), et
dans lequel le deuxième dispositif (4) est réalisé pour s'activer à partir de l'état passif d'économie d'énergie à la réception du premier protocole de données à l'intérieur d'un premier intervalle de temps de réception (RX).

2. Système selon la revendication 1, **caractérisé en ce que** le premier dispositif est réalisé pour émettre un deuxième signal ou plusieurs signaux répétés de manière cyclique pour l'authentification du deuxième dispositif (4) avec un deuxième protocole de données à l'intérieur d'un deuxième intervalle de temps d'émission (TXlong) et avec un deuxième temps de cycle, dans lequel le premier intervalle de temps d'émission (TXshort) est plus court que le deuxième intervalle de temps d'émission (TXlong) et le premier temps de cycle est plus court que le deuxième temps de cycle.

3. Système selon la revendication 2, **caractérisé en ce que** le deuxième dispositif (4) est réalisé, après réception du premier protocole de données dans un intervalle de temps d'émission (TXshort) du premier dispositif, pour rester pendant un deuxième intervalle de temps de réception (RXlong) dans un mode réception ou pour passer à un mode réception dans lequel le deuxième signal ou plusieurs signaux du premier dispositif pour l'authentification du deuxième dispositif avec le deuxième protocole de données peuvent être reçus entièrement dans le deuxième intervalle de temps d'émission (TXlong) par le deuxième dispositif (4).

4. Système selon la revendication 3, **caractérisé en ce que** le deuxième intervalle de temps de réception (RXlong) du deuxième dispositif (4) en mode réception, après réception du premier protocole de données dans le premier intervalle de temps d'émission (TXshort), correspond au deuxième temps de cycle du signal transmis dans le deuxième intervalle d'émission (TXlong) ou de plusieurs signaux transmis dans le deuxième intervalle d'émission (TXlong) du premier dispositif.

5. Système selon l'une quelconque des revendications précédentes 2, 3 ou 4, **caractérisé en ce que** le deuxième signal ou les plusieurs signaux du premier dispositif sont divisés en deux ou plusieurs blocs.

6. Système selon l'une quelconque des revendications précédentes 2, 3, 4 ou 5, **caractérisé en ce qu'**en cas d'intersection au moins partielle du premier intervalle de temps de réception (RX) du deuxième dispositif (4) avec le deuxième intervalle de temps d'émission (TXlong) du premier dispositif, le deuxième dispositif (4) est réalisé pour rester en mode réception pendant un troisième intervalle de temps de réception ou pour passer au mode réception dans lequel le deuxième signal ou plusieurs signaux du premier dispositif peuvent être reçus complètement avec le deuxième protocole de données par le deuxième dispositif.

7. Système selon l'une quelconque des revendications précédentes, **caractérisé en ce que** la fréquence de l'onde porteuse pour le premier et/ou le deuxième signal se situe dans la plage VHF (30 MHz à 300 MHz) et/ou dans la plage UHF (300 MHz à 3 GHz).

8. Système selon l'une quelconque des revendications précédentes, **caractérisé en ce que** la fréquence de l'onde porteuse pour le premier et/ou le deuxième signal est supérieure à 100 MHz, située de préférence dans la bande ISM de 433,05 MHz à 434,79 MHz et/ou dans la bande ISM de 902 MHz à 928 MHz.
